# EUROPEAN PATENT APPLICATION

(11) **EP 4 295 677 A1**
(43) Date of publication of application: **27.12.2023**
(21) Application number: 22882355.5
(22) Date of filing: 13.07.2022
(51) Int. Cl.: A01K 13/00

(54) **CATTLE BODY BRUSH DEVICE**

(30) Priority: 20.10.2021 CN 202122525136 U
(71) Applicant: FJ Dynamics Co., Ltd., Shenzhen, Guangdong 518000 (CN)
(72) Inventor: SHA, Ye, Shenzhen, Guangdong 518000 (CN); WU, Di, Shenzhen, Guangdong 518000 (CN); ZHOU, Jie, Shenzhen, Guangdong 518000 (CN); HUANG, Shaoxie, Shenzhen, Guangdong 518000 (CN)
(74) Representative: Zaboliene, Reda
(86) International application number: PCT/CN2022/105347
(87) International publication number: WO 2023/065733

(57) **Abstract**

A cattle body brush device. The cattle body brush device comprises a cross beam support (1), which is configured to be horizontally and fixedly mounted to the outside; a reset assembly (2), the reset assembly (2) comprising a central shaft (21) and a torsional spring (22), wherein the central shaft (21) is arranged at one end of the cross beam support (1) in such a manner that the central shaft (21) rotates around a vertical axis (400), a first end of the torsional spring (22) is connected to the central shaft (21), a second end of the torsional spring (22) is connected to the cross beam support (1), and the torsional spring (22) is configured to define a rotation angle of the central shaft (21) and enable the central shaft (21) to be reset and return to a preset zero-point position when in a natural state; a rotation power member (3) provided at the bottom end of the central shaft (21); and a hair brush assembly (4) mounted at an output end of the rotation power member (3), wherein the rotation power member (3) is configured to drive the hair brush assembly (4) to rotate.

## Description

This application claims priority to Chinese Patent Application No. 202122525136.2 filed on October 20, 2021 in the China National Intellectual Property Administration, the contents of which are incorporated by reference herein.

### TECHNICAL FIELD

The present disclosure relates to animal husbandry cleaning equipment technologies field, in particular to a cattle body brush device.

### BACKGROUND

In modern animal husbandry, animals are usually kept in a certain area, for example, cattle are gathered in a fixed area for move around, the body surface may be stained with manure, mud, forage, etc., especially when the cattle lying on the ground, they may become more dirty, if they are not cleaned regularly, the cattle's skin may become itchy and cause diseases, such as mastitis, which will affect the cattle's milk production. In some small-scale or self-employed farms, the cattle are usually cleaned manually, and in some large-scale farms, the cattle are usually cleaned by an automatic cattle body brush, the cattle body brush in related art is fixed, a brush rod is driven by a motor to rotate, when the cattle is close to the brush rod, the brush rod can roll the cattle's skin to remove the dirt and debris on the skin surface, in the related art, the brush rod and the motor are rigidly connected and the motor is fixedly installed on a supporting crosspiece, when the cattle touches the brush rod to reciprocate friction and the motor does not start in time, or when the brush rod is entangled with the cattle hair and cannot be separated, the brush rod or the motor is easily broken and damaged by the swinging impact or friction of the cattle.

### SUMMARY OF THE INVENTION

The present disclosure provides a cattle body brush device, using torsional spring to connect a central shaft, which can limit a rotation angle of the central shaft, buffer an impact force from the cattle, and ensure a hair brush assembly to effectively clean the skin of the cattle.

One embodiment provides a cattle body brush device including a cross beam support (1) configured to fixedly mounted to an external horizontal; a reset assembly (2), the reset assembly (2) comprising a central shaft (21) and a torsional spring (22), the central shaft (21) rotatably arranged to an end of the cross beam support (1) relative to a vertical axis (400), a first end of the torsional spring (22) connected to the central shaft (21), a second end of the torsional spring (22) connected to the cross beam support (1), the torsional spring (22) configured to limit a rotation angle of the central shaft (21) and recover the central shaft (21) to a preset zero-point position in a natural status; a rotation power member (3) arranged on a bottom of the central shaft (21); and a hair brush assembly (4) mounted on an output end of the rotation power member (3), the rotation power member (3) configured to drive the hair brush assembly (4) to rotate.

### BRIEF DESCRIPTION OF THE DRAWINGS

FIG. 1 is a schematic diagram of an embodiment of the present application of a cattle body brush device.
FIG. 2 is a partial enlarge schematic diagrams of position A as shown in FIG. 1.
FIG. 3 is a schematic diagram of an embodiment of the present application of a recovering assembly and a positioning assembly.

In the figures:
100, first rotation axis;
200, central axis of output end;
300, first horizontal axis;
400, vertical axis;
1, cross beam support;
2, reset assembly; 21, central shaft; 22, torsional spring
3, rotation power member;
4, hair brush assembly; 41, brush roll; 42, brush body
5, mounting rack assembly; 51; swing connecting piece; 52, fix rack; 521, connecting board; 522, rack;
6, positioning assembly; 61, bearing housing; 62, bearing;
7, start-stop controller
8, switch fixed base
9, first shaft pin
10, second shaft pin

### DETAILED DESCRIPTION

In the description of this application, unless otherwise clearly stipulated and limited, the terms "connecting", "connected" and "fixed" should be understood in a broad sense, for example, it can be a fixed connection, a detachable connection, or an integral body; it can be a mechanical connection or an electrical connection; it can be a direct connection or an indirect connection through an intermediary, and it can be an internal communication between two components or an interaction relationship between two components. Those of ordinary skill in the art can understand the specific meanings of the above terms in this application in specific situations.

In the description of this application, unless otherwise clearly stipulated and limited, a first feature being "on" or "under" a second feature may include that the first and second features are in direct contact, and may also include that the first and second features are not in direct contact but are in contact through another feature between them. Moreover, the first feature is "above", "on" and "over" the second feature include that the first feature is directly above and obliquely above the second feature, or simply means that the first feature is horizontally higher than the second feature. The first feature is "below", "under" and "down" the second feature includes the first feature being directly below the second feature and below the needle, or simply meaning that the first feature is less horizontally than the second feature.

In the description herein, it should be understood that the terms "upper", "lower", "left", "right", and other orientations or positional relationships are based on the orientations or positional relationships shown in the drawings, and are only for convenience of description and simplifies operation, rather than indicating or implying that the device or element referred to must have a specific orientation, be constructed and operated in a specific orientation, and thus should not be construed as limiting the application. In addition, the terms "first" and "second" are only used for distinction in description and have no special meaning.

In the description of this specification, the description with reference to the terms "an embodiment", "example" and the like means that the specific features, structures, materials or characteristics described in conjunction with this embodiment or example are included in at least one embodiment or example of the present application middle. In this specification, schematic representations of the above terms do not necessarily refer to the same embodiment or example.

Technical schemes of the present application will be further described below in conjunction with the accompanying drawings and through specific embodiments.

When cattle are active in a farm, they often have itchy skin, the cattle may consciously find a device that can rub against itching, such as a cattle body brush device, driving motors of some cattle body brush devices do not always work. When the cattle leaning against a brush rod, the brush rod is subjected to the impact force of the cattle, the brush rod and the drive motor, which are rigidly connected to each other, may be damaged. When the drive motor is running, the drive motor drives the brush rod to rotate to clean the skin of the cattle, if the driving motor stops running unexpectedly, for example, the brush rod entangles the hair of the cattle and the driving motor cannot be reversed or the drive motor is powered off. The reciprocating friction of the cattle on the brush rod may cause the central shaft to rotate freely, and the skin of the cattle cannot be effectively cleaned.

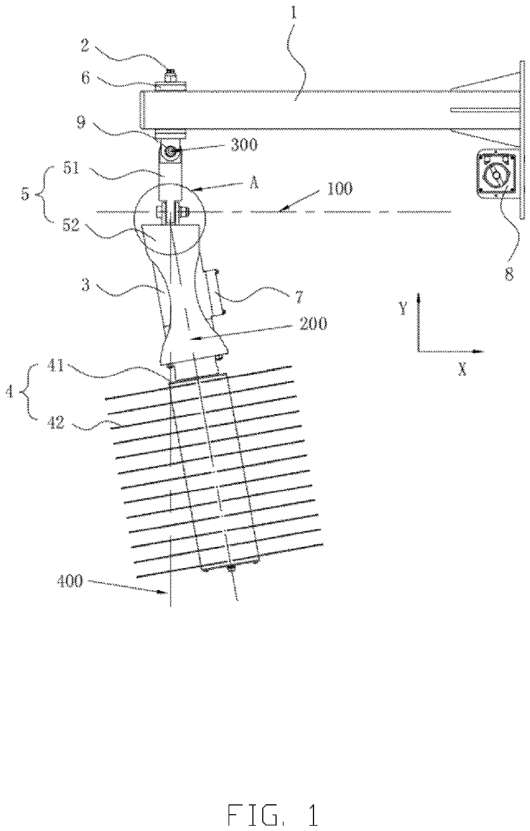

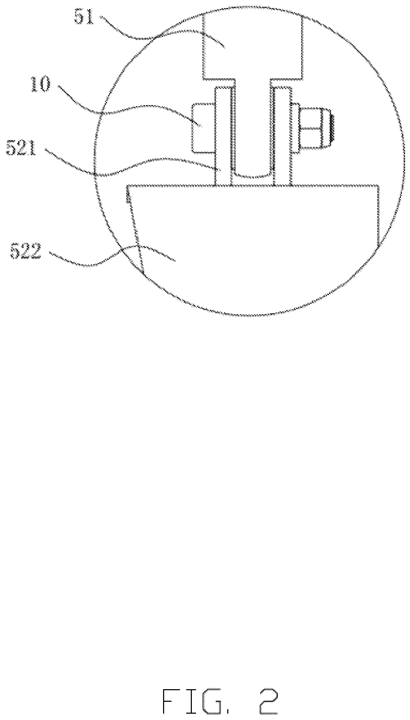

As shown in FIGS. 1 to 3, a cattle body brush device according to present embodiment is provided to solve the above-mentioned problems. The cattle body brush device includes a cross beam support 1, a reset assembly 2, and a rotation power member 3. The cross beam support 1 is configured to fixedly mounted to an external horizontal; the reset assembly 2 includes a central shaft 21 and a torsional spring 22, the central shaft 21 is rotatably arranged to an end of the cross beam support 1 relative to a vertical axis 400, a first end of the torsional spring 22 is connected to the central shaft 21, a second end of the torsional spring 22 is connected to the cross beam support 1, the torsional spring 22 is configured to limit a rotation angle of the central shaft 21 and recover the central shaft 21 to a preset zero-point position in a natural status. The rotation power member 3 is arranged on a bottom of the central shaft 21, a hair brush assembly 4 is mounted on an output end of the rotation power member 3, the rotation power member 3 is configured to drive the hair brush assembly 4 to rotate.

In one embodiment, the cross beam support 1 is fixedly mounted on a wall or a handrail, when the cattle leans against the hair brush assembly 4 and rubs forth and back, the torsional spring 22 can limit the rotation angle of the central shaft 21 to prevent the hair brush assembly 4 cannot clean the skin surface of the cattle due to free rotation of the central shaft 21. After the rotation power member 3 activates, the hair brush assembly 4 rolls and brushes the skin of the cattle for cleaning to improve a cleaning efficiency. When the hair brush assembly 4 is twined by the hair of the cattle, the rotation power member 3 may stop the hair brush assembly 4 or drive the hair brush assembly 4 to rotate reversely. If the rotation power member 3 is in a stop driving status and the cattle continues to rub, the central shaft 21 connected to the hair brush assembly 4 may reciprocally rotate in two opposite rotation directions, the hair brush assembly 4 or the rotation power member 3 may suffer impact force from the cattle, for preventing a damage of the hair brush assembly 4 or the rotation power member 3, the rotation power member 3 can continuously drive the hair brush assembly 4 in forward direction or reverse direction to separate the hair brush assembly 4 and the hair of the cattle. The rotation power member 3 can be selectable from servo motor or stepping motor. When the cattle leaves the hair brush assembly 4, the torsional spring 22 can recover the central shaft 21, so the central shaft 21 can drive the rotation power member 3 and the hair brush assembly 4 to recover.

In present embodiment, when the hair brush assembly 4 in is the natural status, a predetermined included angle is formed between a central axis 200 of the output end of the rotation power member 3 and the vertical axis 400. In other embodiments, when the hair brush assembly 4 in the natural status, the central axis 200 of the output end of the rotation power member 3 is parallel with the vertical axis 400. When the central shaft 21 is in the preset zero-point position, the torsional spring 22 is not in elastic deformation; when the hair brush assembly 4 in a non-natural status, meaning the reset assembly 2 suffers external force, the central shaft 21 deflects and deviates from the preset zero-point position, the torsional spring 22 is in elastic deformation and generates elastic potential energy. When the reset assembly 2 suffers no external force, the hair brush assembly 4 recovers to the natural status according to gravity action, the central shaft 21 recovers to the preset zero-point position according to the elastic potential energy of the torsional spring 22. The central axis of the hair brush assembly 4 is parallel with or coincident with the central axis 200 of the output end of the rotation power member 3. In the present embodiment, the rotation power member 3 is connected to the central shaft 21 through a mounting rack assembly 5. In other embodiments, a housing of the rotation power member 3 may be directly mounted on the central shaft 21. In the present embodiment, the central axis of the hair brush assembly 4 is coincident with the central axis 200 of the output end of the rotation power member 3, that is the hair brush assembly 4 is inclined, which is convenient for resisting to the cattle for improving the cleaning result. In other embodiments, the central axis of the hair brush assembly 4 is parallel with the central axis 200 of the output end of the rotation power member 3, that is, the central axis of the hair brush assembly 4 is not coincident with the central axis 200 of the output end of the rotation power member 3, the hair brush assembly 4 rotates prejudicially, for improving a massage result to the cattle. A predetermined included angle is formed between the central axis 200 of the output end of the rotation power member 3 and the vertical axis 400, the predetermined included angle may be 5° to 45°, such as 5°, 10°, 15°, and 30°, which may be set according to actual demands. The hair brush assembly 4 is included in the natural status, which can avoid an operating path, such as the operator can mount a cattle body brush device to the wall or place the forage under the cattle body brush device, the hair brush assembly 4 being included can avoid the operator.

In the present embodiment, the cattle body brush device includes the mounting rack assembly 5, an upper end of the mounting rack assembly 5 is connected to the central shaft 21, a lower end of the mounting rack assembly 5 is included, the rotation power member 3 is mounted to the lower end of the mounting rack assembly 5.

In one embodiment, the mounting rack assembly 5 includes a swing connecting piece 51 and a fix rack 52, a first end of the swing connecting piece 51 and the central shaft 21 are rotatably connected relative to a first horizontal axis 300, a second end of the swing connecting piece 51 and the fix rack 52 are fixedly connected, the rotation power member 3 is mounted to the fix rack 52. The upper end of the mounting rack assembly 5 can be the swing connecting piece 51, the lower end of the mounting rack assembly 5 can be the fix rack 52. An end of the hair brush assembly 4 is included towards the wall, when the cattle moves towards and resists against the hair brush assembly 4, the hair brush assembly 4 can clean a side portion of the cattle, when the cattle moves further towards the wall, the hair brush assembly 4 may pushed by the cattle, the hair brush assembly 4 drives the swing connecting piece 51 to rotate towards the wall relative to the first horizontal axis 300, rendering the included angle of the hair brush assembly 4 increases until the hair brush assembly 4 can cleans a back of the cattle. In the present embodiment, a top end of the fix rack 52 and the swing connecting piece 51 are rotatably connected relative to a first rotation axis 100, the first horizontal axis 300 is perpendicular to the first rotation axis 100. In other embodiments, the fix rack 52 and the swing connecting piece 51 are fixedly connected. The cattle body brush device of the present embodiment can be applied to cattle of different sizes, when a taller cattle resists against the hair brush assembly 4 in an X-axis direction, the hair brush assembly 4, the rotation power member 3, and the mounting rack assembly 5 rotate to a position of a first height relative to the first horizontal axis 300. When a shorter cattle resists against the hair brush assembly 4 in the X-axis direction, the hair brush assembly 4, the rotation power member 3, and the mounting rack assembly 5 rotate to a position of a second height relative to the first horizontal axis 300. The first height is higher than the second height. The central shaft 21 and the mounting rack assembly 5 are rotatably connected through a first shaft pin 9, the first horizontal axis 300 is parallel with a Z-axis.

In the present embodiment, the fix rack 52 includes a connecting board 521 and a rack 522, the connecting board 521 is aslant arranged on a top of the rack 522, the connecting board 521 and the swing connecting piece 51 are rotatably connected relative to the first rotation axis 100, the rotation power member 3 is mounted to the rack 522. When the cattle resists against the hair brush assembly 4 in a Z-axis direction, the hair brush assembly 4, the fix rack 52, and the rotation power member 3 rotate relative to the first rotation axis 100, that is, a moving direction of the hair brush assembly 4 is parallel with the wall, the first rotation axis 100 is parallel with the X-axis. Since the torsional spring 22 can drive the central shaft 21 to recover, thus, the deflection of the hair brush assembly 4 in the X-axis direction and the Z-axis direction can rapidly recover. The swing connecting piece 51 and the fix rack 52 are rotatably connected through a second shaft pin 10. The connecting board 521 and the rack 522 are integrated.

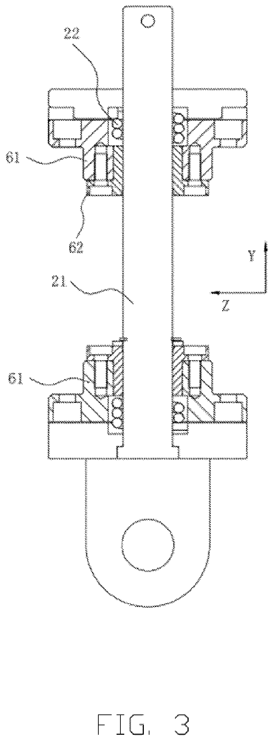

As shown in FIG. 3, in one embodiment, the cattle body brush device further includes a positioning assembly 6, the positioning assembly 6 includes a bearing housing 61 and a bearing 62, the bearing housing 61 is fixedly mounted to the cross beam support 1, the bearing 62 is rotatably mounted to a mounting hole of the bearing housing 61, the central shaft 21 is tightly inserted to an inner ring of the bearing 62.

In one embodiment, the positioning assembly 6 can be arranged as two groups, one group of the positioning assembly 6 is positioned on a bottom of the cross beam support 1, the other group of the positioning assembly 6 is positioned on a top of the cross beam support 1, the central shaft 21 is arranged between the two groups of the positioning assembly 6. The positioning assembly 6 is arranged as two groups, which can ensure a stability of the central shaft 21.

In one embodiment, the torsional spring 22 covers a periphery of the central shaft 21, a first end of the torsional spring 22 is connected to an external wall of the central shaft 21, a second end of the torsional spring 22 is connected to an internal wall of the mounting hole of the bearing housing 61.

In one embodiment, the hair brush assembly 4 includes a brush roll 41 and a brush body 42, the brush roll 41 is mounted to the output end of the rotation power member 3, the brush body 42 surrounds a periphery of the brush roll 41. The brush body 42 may be made of nylon materials, the brush roll 41 may be made of polypropylene fiber.

In one embodiment, the cattle body brush device further includes a switch fixed base 8, the switch fix base 8 is configured to support a switch assembly.

It one embodiment, the cattle body brush device further includes a start-stop controller 7, the start-stop controller 7 is mounted to a side of the rotation power member 3, the start-stop controller 7 is electrically connected to the rotation power member 3, the start-stop controller 7 is configured to control a running of the rotation power member 3. When the cattle lean against or scratches the hair brush assembly 4, the start-stop controller 7 identifies a present included angle of the hair brush assembly 4 and controls the rotation power member 3. A control method of the start-stop controller 7 to the rotation power member 3 can be: when the start-stop controller 7 identifies the included angle of the hair brush assembly 4 is greater than a predetermined angle, controlling the rotation power member 3 to rotate forwardly in uniform velocity, until the included angle of the hair brush assembly 4 is smaller than the predetermined angle, the rotation power member 3 stop rotating after running for a predetermined time period. When a tail of the cattle or other objects are rolled into the hair brush assembly 4, rending the hair brush assembly 4 stops rotating, the start-stop controller 7 identifies a running electric current of the rotation power member 3 is overcurrent and controls the rotation power member 3 to rotate reversely after stopping for the predetermined time period, the start-stop controller 7 alternately controls the rotation power member 3 to rotate forwardly and reversely for a couple times. After the controls the rotation power member 3 alternately rotated forwardly and reversely for the couple times, if the start-stop controller 7 identifies a running electric current of the rotation power member 3 is still overcurrent, the start-stop controller 7 controls an alertor to raise an alarm, indicating the operator to interfere manually. The other objects may include hair of cattle, forage, etc.

In one embodiment, when the cattle body brush device is powered on, the start-stop controller 7 can feedback the present included angle of the hair brush assembly 4 through a posture sensor, the start-stop controller 7 performs logical determination according to the present included angle of the hair brush assembly 4. When the included angle of the hair brush assembly 4 is greater than or equal to the predetermined angle of the hair brush assembly 4 in the natural status, the start-stop controller 7 controls the rotation power member 3 to forwardly rotate with a rated power in uniform velocity. When the included angle of the hair brush assembly 4 is smaller than the predetermined angle, the start-stop controller 7 drives the rotation power member 3 to stop after running for the predetermined time period through logical determination. If the included angle of the hair brush assembly 4 is greater than the predetermined angle and a working current of the rotation power member 3 is greater than a predetermined maximum current value, feedbacking a present current value through an overcurrent detecting sensor, the start-stop controller 7 determines the hair brush assembly 4 is stuck by the tail of the cattle or other objects according to the present current value, the start-stop controller 7 controls the rotation power member 3 to drive the hair brush assembly 4 to alternately rotated forwardly and reversely. If alternately rotating the hair brush assembly 4 for more than five times, the start-stop controller 7 controls the rotation power member 3 to stop running, the start-stop controller 7 identifies abnormal information, the alertor raises an alarm, indicating the operator to interfere manually. In one embodiment, the start-stop controller 7 can be a CPU.

## Claims

1. A cattle body brush device comprising:
a cross beam support (1) configured to fixedly mounted to an external horizontal;
a reset assembly (2), the reset assembly (2) comprising a central shaft (21) and a torsional spring (22), the central shaft (21) rotatably arranged to an end of the cross beam support (1) relative to a vertical axis (400), a first end of the torsional spring (22) connected to the central shaft (21), a second end of the torsional spring (22) connected to the cross beam support (1), the torsional spring (22) configured to limit a rotation angle of the central shaft (21) and recover the central shaft (21) to a preset zero-point position in a natural status;
a rotation power member (3) arranged on a bottom of the central shaft (21); and
a hair brush assembly (4) mounted on an output end of the rotation power member (3), the rotation power member (3) configured to drive the hair brush assembly (4) to rotate.

2. The cattle body brush device according to claim 1, wherein when the hair brush assembly (4) is in a natural status, a predetermined included angle is formed between a central axis (200) of the output end of the rotation power member (3) and the vertical axis (400), a central axis of the hair brush assembly (4) is parallel with or coincident with the central axis (200) of the output end of the rotation power member (3).

3. The cattle body brush device according to claim 2, further comprising a mounting rack assembly (5), wherein an upper end of the mounting rack assembly (5) is connected to the central shaft (21), a lower end of the mounting rack assembly (5) is included, the rotation power member (3) is mounted to the lower end of the mounting rack assembly (5).

4. The cattle body brush device according to claim 3, wherein the mounting rack assembly (5) comprises a swing connecting piece (51) and a fix rack (52), a first end of the swing connecting piece (51) and the central shaft (21) are rotatably connected relative to a first horizontal axis (300), a second end of the swing connecting piece (51) and the fix rack (52) are fixedly connected, the rotation power member (3) is mounted to the fix rack (52).

5. The cattle body brush device according to claim 4, wherein the fix rack (52) comprises a connecting board (521) and a rack (522), the connecting board (521) is aslant arranged on a top of the rack (522), the connecting board (521) and the swing connecting piece (51) are rotatably connected relative to a first rotation axis (100), the rotation power member (3) is mounted to the rack (522), the first horizontal axis 300 is perpendicular to the first rotation axis (100).

6. The cattle body brush device according to claim 1, further comprising a positioning assembly (6), wherein the positioning assembly 6 comprises a bearing housing (61) and a bearing (62), the bearing housing (61) is fixedly mounted to the cross beam support (1), the bearing (62) is rotatably mounted to a mounting hole of the bearing housing (61), the central shaft (21) is tightly inserted to an inner ring of the bearing (62).

7. The cattle body brush device according to claim 6, wherein the positioning assembly (6) is arranged as two groups, one group of the positioning assembly (6) is positioned on a bottom of the cross beam support (1), the other group of the positioning assembly (6) is positioned on a top of the cross beam support (1), the central shaft (21) is arranged between the two groups of the positioning assembly (6).

8. The cattle body brush device according to claim 6, wherein the torsional spring (22) covers a periphery of the central shaft (21), a first end of the torsional spring (22) is connected to an external wall of the central shaft (21), a second end of the torsional spring (22) is connected to an internal wall of the mounting hole of the bearing housing (61).

9. The cattle body brush device according to claim 1, wherein the hair brush assembly (4) comprises a brush roll (41) and a brush body (42), the brush roll (41) is mounted to the output end of the rotation power member (3), the brush body (42) surrounds a periphery of the brush roll (41).

10. The cattle body brush device according to claim 1, further comprising a start-stop controller (7), wherein the start-stop controller (7) is mounted to a side of the rotation power member (3), the start-stop controller (7) is electrically connected to the rotation power member (3), the start-stop controller (7) is configured to control a running of the rotation power member (3).
